# EUROPÄISCHE PATENTSCHRIFT

(11) **EP 2 650 475 B1**
(45) Veröffentlichungstag und Bekanntmachung des Hinweises auf die Patenterteilung: **16.09.2015**
(21) Anmeldenummer: 12164186.4
(22) Anmeldetag: 13.04.2012
(51) Int. Cl.: F01D 5/14

(54) **Schaufel für eine Strömungsmaschine, Schaufelanordnung sowie Strömungsmaschine**
Blade for a flow device, blade assembly and flow device
Pale pour une turbomachine, agencement d'aubes ainsi que la turbomachine

(43) Veröffentlichungstag der Anmeldung: 16.10.2013
(73) Patentinhaber: MTU Aero Engines AG, 80995 München (DE)
(72) Erfinder: Pernleitner, Martin, 85221 Dachau (DE); Dopfer, Manfred, 85716 Unterschleißheim (DE); Hübner, Norbert, 85221 Dachau (DE)

(56) Entgegenhaltungen:
- EP-A2- 1 762 700
- US-A1- 2010 080 708
- US-A1- 2010 158 696

## Beschreibung

Die Erfindung betrifft eine Schaufel für eine Strömungsmaschine, insbesondere ein Flugzeugtriebwerk, nach dem Oberbegriff des Patentanspruchs 1, eine Schaufelanordnung für eine Strömungsmaschine und eine Strömungsmaschine. Dabei ist der Oberbegriff des Patentanspruchs 1 in der Druckschrift US 2010/158696 A1 offenbart.

Strömungsmaschinen wie Flugzeugtriebwerke haben regelmäßig Laufschaufeln mit einem Innendeckband zum Begrenzen eines vom Hauptstrom durchströmten Ringraums bzw. Hauptstromkanals. Das Innendeckband ist zwischen einem Schaufelschaft und einem Schaufelblatt angeordnet und herkömmlicherweise konturlos. Das Schaufelblatt erstreckt sich weg von dem Innendeckband und weist stets einen verrundeten Übergangsbereich zum Innendeckband auf. Zur Strömungsbeeinflussung können die Deckbänder von Lauf- und Leitschaufeln auch mit Konturierungen in Form von Erhebungen oder Vertiefungen versehen sein. Wie beispielsweise in den Patentanmeldungen WO 2010/068391 A2, US 6,669,445 und WO 2011/022111 A2 gezeigt, können sich die Konturierungen auf das Deckband der jeweiligen Nachbarschaufel erstrecken.

Generell gibt es Bestrebungen, die Anzahl der Schaufeln, insbesondere bei schnelllaufenden Rotoren, zu reduzieren. Hierdurch hat jede Schaufel eine höhere aerodynamische Arbeit zu verrichten, wodurch die Schaufels einer höheren aerodynamischen und strukturmechanischen Belastung ausgesetzt sind. Zur Vermeidung von Schaufelbrüchen bzw. Schaufelbeschädigungen sind diese daher gesondert zu stabilisieren, was generell zu einer massiven Bauweise im Nabenbereich führt. Aus strukturmechanischer Sicht sollte jedoch ein Räumwinkel klein und ein Unterschied zwischen einem Innendeckbandwinkel und dem Räumwinkel so klein wie möglich sein. Aus aerodynamischer Sicht sind Abrisskanten bzw. Stufen im Bereich der Deckbandseitenkanten zu vermeiden.

Aufgabe der Erfindung ist es, eine Schaufel für eine Strömungsmaschine, insbesondere ein Flugzeugtriebwerk, zu schaffen, die die vorgenannten Nachteile beseitigt und fertigungstechnisch einfach herzustellen ist. Des Weiteren ist es Aufgabe der Erfindung, eine Schaufelanordnung für eine Strömungsmaschine mit hochbelastbaren Schaufeln sowie eine Strömungsmaschine mit einem hohen Wirkungsgrad zu schaffen.

Diese Aufgabe wird gelöst durch eine Schaufel mit den Merkmalen des Patentanspruchs 1, durch eine Schaufelanordnung mit den Merkmalen des Patentanspruchs 7 und durch eine Strömungsmaschine mit den Merkmalen des Patentanspruchs 8.

Eine erfindungsgemäße Schaufel für eine Strömungsmaschine, insbesondere ein Flugzeugtriebwerk, hat ein Deckband mit zwei entgegengesetzten Seitenkanten zum Begrenzen eines Hauptstromkanals und ein Schaufelblatt, das sich von dem Deckband weg erstreckt. Erfindungsgemäß hat die Schaufel mindestens zwei mindestens zweigeteilte Übergangsbereiche (zur Stabilisierung des Schaufelblattes), wobei ein erster Teil des einen Übergangsbereichs das Schaufelblatt wurzelseitig umgreift und an eine Seitenkante geführt ist, wobei der andere Übergangsbereich einer benachbarten Schaufel zugeordnet ist und ein zweiter Teil des anderen Übergangsbereichs als eine in Querrichtung des Deckbandes versetzte Erhebung im Bereich der anderen Seitenkante auf dem Deckband angeordnet ist, wobei die Erhebung in Form dem zweiten Teil des einen Übergangsbereichs entspricht, der auf einer benachbarten Schaufel vorgesehen ist. Dabei umgreift der erster Teil des einen Übergangsbereichs das Schaufelblatt wurzelseitig vollständig und ist auf der Oberfläche des Deckbands angeordnet.

Die erfindungsgemäße Schaufel ermöglicht die Bildung von Schaufelanordnungen mit sich über Trennfugen zwischen den benachbarten Schaufeln erstreckenden Übergangsbereichen, ohne dass Abrisskanten oder Stufen an den Seitenkanten der Deckbänder gebildet werden. Durch das Hinüberführen auf zumindest ein benachbartes Deckband kann der Übergangsbereich verbreitert ausgebildet werden und somit aus strukturmechanischer Sicht eine höhere Stabilisierung des jeweiligen Schaufelblattes erreicht werden. Somit sind grundsätzlich bei unveränderter Deckbandgröße und bei unverändertem Fußprofil größere Schaufelblätter möglich. Jede Schaufel kann somit eine größere aerodynamische Arbeit verrichten, wodurch insgesamt die Anzahl der Schaufeln pro Schaufelreihe reduziert werden kann. Dabei wird durch das Vermeiden von Abrisskanten bzw. Stufen im Bereich der Seitenkanten ein Strömungsabriss vermieden. Zudem wird ein kleiner Räumwinkel geschaffen und ein günstiges Verhältnis zwischen dem Räumwinkel und einem Deckbandwinkel eingestellt. Die Deckbänder können Innendeckbänder oder Außendeckbänder sein, die Schaufeln können Laufschaufeln, Leitschaufeln oder Schaufelsegmente sein.

Um das Schaufelblatt aus aerodynamischer Sicht optimal profilieren zu können, kann der Übergangsbereich sowohl druck- als auch saugseitig über die Seitenkante hinausgeführt sein und das Deckband zumindest eine druckseitige Erhebung sowie zumindest eine saugseitige Erhebung aufweisen. Hierdurch kann das Schaufelblatt direkt an die Seitenkanten herangeführt werden und somit die Breite des Deckbandes vollständig ausgenutzt werden. Mindestabstände zwischen den Seitenkanten und dem Schaufelblatt bestehen quasi durch das erfindungsmäße Herüberführen der Übergangsbereiche nicht.

Um den Einfluss des Übergangsbereichs auf die Strömung zwischen den jeweils benachbarten Schaufelblättern zu minimieren, kann der Übergangsbereich tangential in das Deckband übergehen. Hierdurch läuft der Übergangsbereich stufenlos aus, was zudem aus strukturmechanischer Sicht günstig ist. Zudem begünstigt ein tangentialer Übergang die Herstellung der Schaufel als Gussteil.

Der Übergangsbereich hat vorzugsweise blattwurzelseitig eine konstante Höhe. Hierdurch geht das Schaufelblatt druck- und saugseitig auf gleicher Höhe in sein tragflächenartiges Profil über, wodurch eine im Vergleich zu einem herkömmlichen Schaufelblatt gleichbleibende bzw. nahezu gleichbleibende Nachlaufströmung erreicht wird.

Der Übergangsbereich hat vorzugsweise an dem Schaufelblatt eine maximale Höhe, die sich in Richtung des Deckbandes verkleinert. Hierdurch lässt sich eine günstige Krafteinleitung in das Deckband realisieren. Dabei ist es weiterhin günstig, wenn ein Übergangsradius seine Orientierung nicht ändert und der Übergangsbereich somit verrundet ist.

Vorzugsweise hat der Übergangsbereich eine in etwa konstante Breite, wodurch die Strömung im Bereich des Übergangsbereich vergleichmäßigt wird.

Eine bevorzugte Schaufelanordnung für eine Strömungsmaschine, insbesondere ein Flugzeugtriebwerk, hat zumindest zwei erfindungsgemäße Schaufeln, wobei die Schaufeln seitlich nebeneinander angeordnet sind und eine Schaufel mit einer deckbandseitigen Erhebung zumindest einen abgetrennten Abschnitt eines Übergangsbereichs der anderen Schaufel bildet.

Hierdurch erstrecken sich die Übergangsbereiche zumindest abschnittsweise auf das jeweils benachbarte Deckband und laufen auf diesem aus. Mit anderen Worten, die Übergangsbereiche sind mit ihren Radien über eine Trennfuge zwischen den benachbarten Schaufeln geführt, wodurch zum einen die Übergangsbereiche verbreitert werden können und somit eine hohe Stabilisierung der Schaufelblätter erfolgt. Zum anderen werden Stufen oder Abrisskanten im Bereich der Trennfugen verhindert. Zudem wird ein kleiner Räumwinkel geschaffen und ein günstiges Verhältnis zwischen dem Räumwinkel und einem Deckbandwinkel eingestellt.

Eine bevorzugte Strömungsmaschine hat eine erfindungsgemäße Schaufelanordnung bzw. eine Vielzahl von erfindungsgemäßen Schaufeln zur Bildung zumindest einer Schaufelreihe. Eine derartige Strömungsmaschine zeichnet sich durch einen hohen Wirkungsgrad aus, da aufgrund der hohen aerodynamischen und strukturmechanischen Belastbarkeit jeder einzelnen Schaufel die Schaufelanzahl pro Schaufelreihe reduziert werden kann.

Sonstige vorteilhafte Ausführungsbeispiele der Erfindung sind Gegenstand weiterer Unteransprüche.

Im Folgenden wird ein bevorzugtes Ausführungsbeispiel der Erfindung anhand stark vereinfachter schematischer Darstellungen näher erläutert. Es zeigen:
- Figur 1: eine Darstellung von zwei benachbarten Laufschaufeln einer Laufschaufelreihe in Strömungsrichtung, und
- Figur 2: eine Draufsicht im Teilschnitt auf drei benachbarte Laufschaufeln der Laufschaufelreihe.

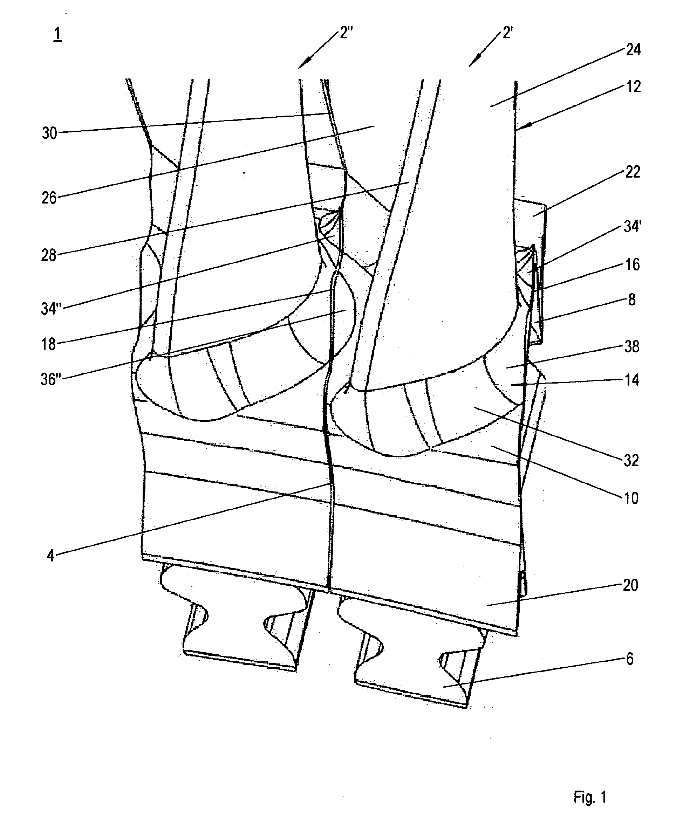

In Figur 1 ist ein Ausschnitt einer Laufschaufelreihe 1 einer Strömungsmaschine in Strömungsrichtung eines Hauptstroms gezeigt. Die Strömungsmaschine ist beispielsweise ein Flugzeugtriebwerk und die Laufschaufelreihe 1 ist turbinenseitig angeordnet. Die Laufschaufelreihe 1 hat eine Vielzahl von seitlich bzw. in Umfangsrichtung nebeneinander angeordneten Leitschaufeln 2', 2", die jeweils über eine im Betrieb geschlossene Trennfuge 4 voneinander getrennt sind. Die Laufschaufeln 2', 2" (2) sind bspw. Feingussteile und haben jeweils einen Fuß 6 zur Anordnung an einer Rotorschiebe, einen Hals bzw. Schaft 8, ein Innendeckband 10, ein Schaufelblatt 12 sowie einen Übergangsbereich 14.

Der Fuß 6 ist als ein sogenannter Tannenbaumfuß ausgebildet. Auch andere Fußformen, wie Schwalbenschwanz, Hammerkopf etc. sind hier möglich. Der Tannenbaumfuß hat eine Vielzahl von axialen Vorsprüngen und wird in entsprechende Axialnuten einer Rotorscheibe eingeschoben. Der Hals 8 ist ein Verbindungselement zwischen dem Fuß 6 und dem Schaufelblatt 12 und wird radial außen von dem Innendeckband 10 begrenzt.

Das Innendeckband 10 begrenzt einen von dem Hauptstrom durchströmten Ringraum. Es erstreckt sich in axialer Richtung und hat zwei entgegengesetzte Seitenkanten 16, 18, von denen die eine saug- und die andere druckseitig angeordnet ist. Zudem hat das Innendeckband 10 einen radial nach innen bzw. in Richtung des Fußes 6 versetzten stromaufwärtigen bzw. vorderen Vorsprung 20 sowie einen stromabwärtigen bzw. hinteren Vorsprung 22.

Das Schaufelblatt 12 erstreckt sich von dem Innendeckband 10 weg bzw. radial nach außen und ist somit im montierten Zustand in dem Ringraum angeordnet. Es hat ein tragflächenähnliches Profil mit einer Saugseite 24, einer entgegengesetzten Druckseite 26, einer vorderen Anströmkante 28 und mit einer hinteren Abströmkante 30. Zudem hat Schaufelblatt 12 eine nicht bezifferte Blattwurzel und eine nicht skizzierte entgegengesetzte Blattspitze.

Der Übergangsbereich 14 dient zur Stabilisierung des Schaufelblattes 12. Er umgreift das Schaufelblatt 12 wurzelseitig vollumfänglich. Er ist quasi als ein Wurzelkragen des Schaufelblattes 12 ausgebildet, der mit seiner Stirnfläche (Bodenfläche) großflächig mit dem Innendeckband 10 verbunden ist. Vorzugsweise erstreckt sich der Übergangsbereich tangential von dem Schaufelblatt 12 und geht tangential in das Innendeckband 10 über. Dabei hat er insbesondere eine konkave Außenumfangsfläche 32. Der Übergangsbereich 14 ist somit verrundet bzw. mit Radien mit gleichbleibenden Orientierungen versehen. Er hat eine konstante maximale Höhe an dem Schaufelblatt 12 und läuft in Richtung des Innendeckbandes 10 stetig aus. Vorzugsweise hat der Übergangsbereich 14 eine konstante Breite.

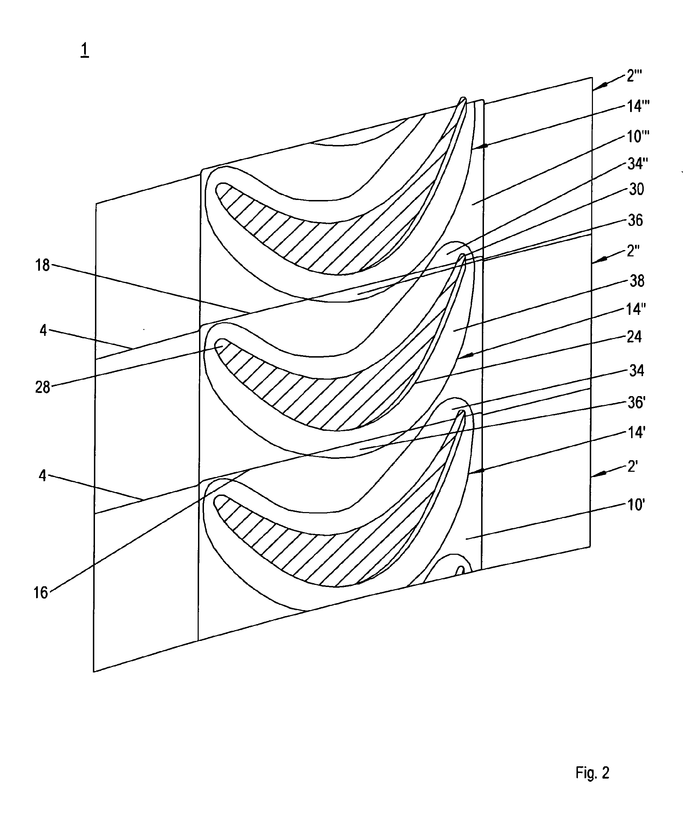

Wie in den Figuren gezeigt und insbesondere in Figur 2 beziffert, erstreckt sich der Übergangsbereich 14" der einen Schaufel 2" auf die Innendeckbänder 10', 10"' der benachbarten Schaufel 2', 2"'. Der Übergangsbereich 14" ist zumindest abschnittweise über die Trennfugen 4 auf die benachbarten Innendeckbänder 10', 10"' geführt und läuft auf diesen aus. Hierdurch können die Übergangsbereiche 14', 14"', 14"' (14) verbeitert werden ohne dass Abrisskanten bzw. Stufen an den Seitenkanten 16, 18 bzw. an den Trennfugen 4 entstehen. Zwischen den Übergangsbereichen 14 sind die Innendeckbänder 10 bei diesem Ausführungsbeispiel kontur- bzw. variationslos. Selbstverständlich können jedoch zwischen den Übergangsbereichen 14 Konturen in Form von Erhebungen oder Vertiefungen ausgebildet sein, die sich ebenfalls über mehrere Innendeckbänder 10 erstrecken bzw. jenseits den Trennfugen 4 weitergeführt sind..

In dem gezeigten Ausführungsbeispiel hat der Übergangsbereich 14" zwei quasi abgetrennte und auf den benachbarten Innendeckbändern 10', 10"' angeordnete Abschnitte. Zum Einen ist der Übergangsbereich 14" im Bereich der Abströmkante 30 auf das Innendeckband 10"' der benachbarte druckseitigen Laufschaufel 2'" geführt. Zum anderen ist der Übergangsbereich 14" im Bereich der Saugseite 24 in etwa mittig zwischen der Anströmkante 28 und der Abströmkante 30 auf das Innendeckband 10' der benachbarten saugseitigen Schaufel 2' geführt. Zur Realisierung dieser über die Trennfugen 4 reichenden Erstreckung des Übergangsbereiche 14 (14', 14", 14"') ist bei diesem Ausführungsbeispiel an der saugseitigen Seitenkante 16 eine Erhebung 34 ausgebildet, die in Form dem im Bereich der Abströmkante 30 abgetrennten Abschnitt des Übergangsbereichs 14" entspricht und in Querrichtung des Innendeckbandes 10" versetzt zu diesem im Bereich der saugseitigen Seitenkante 16 angeordnet ist. Zudem ist an der druckseitigen Seitenkante 18 eine Erhebung 36 ausgebildet, die in Form dem im Bereich der Saugseite 24 abgetrennten Abschnitt des Übergangsbereichs 14" entspricht und die in Querrichtung versetzt zu diesem im Bereich der druckseitigen Seitenkante 18 angeordnet ist. Die abgetrennten Abschnitte 34, 36 sind somit jeweils in Querrichtung der Innendeckbänder 10 bzw. in Umfangsrichtung der Laufschaufelreihe 1 betrachtet versetzt und im Bereich der jeweils entgegengesetzten Seitenkante 16, 18 angeordnet, wobei Sie jeweils einen Teil der Seitenkante 16, 18 bilden. Der im montierten Zustand geschlossene Übergangsbereich 14" wird somit bei diesem Ausführungsbeispiel von einem auf dem Innendeckband 10" der Schaufel 2" angeordneten Kernabschnitt 38, von der auf dem Innendeckband 10"' der Schaufel 2"'angeordneten Erhebung 34"' und von der auf dem Innendeckband 10' der Schaufel 2' angeordneten Erhebung 36' gebildet. Somit ergibt sich für diese hier beispielhaft gezeigte Laufschaufelreihe 1 folgende Systematik: Übergangsbereich 14 (n) = Kernabschnitt 38 (n) + Erhebung 34 (n+1) + Erhebung 36 (n-1), mit n als Schaufelzahl.

Auch wenn die Erfindung in den Figuren mit Bezug zu Laufschaufeln 2', 2", 2"' (2) und insbesondere in Bezug zu deren Innendeckbändern 10 erläutert wird, kann die Erfindung selbstverständlich auch an Außendeckbändern von Laufschaufeln 2 sowie an Innen- und Außendeckbändem von Leitschaufeln bzw. an Schaufelsegmenten vorgesehen sein.

Offenbart sind eine Schaufel für eine Strömungsmaschine, insbesondere ein Flugzeugtriebwerk, mit einem Deckband zum Begrenzen eines Hauptstromkanals, das zwei entgegengesetzte Seitenkante hat, und mit einem Schaufelblatt, das sich von dem Deckband weg erstreckt, wobei ein verrundeter Übergangsbereich vorgesehen ist, der das Schaufelblatt wurzelseitig umgreift und über die eine Seitenkante geführt ist, wobei ein über die eine Seitenkante hinausragender Abschnitt des Übergangsbereich abgetrennt und als eine in Querrichtung versetzte Erhebung im Bereich der anderen Seitenkante angeordnet ist, eine Schaufelanordnung mit zumindest zwei derartigen Schaufeln sowie eine Strömungsmaschine mit einer Vielzahl von derartigen Schaufeln.

### Bezugszeichenliste

- 1: Laufschaufelreihe
- 2, 2', 2": Laufschaufel
- 4: Trennfuge
- 6: Fuß
- 8: Hals
- 10, 10', 10", 10"': Innendeckband
- 12: Schaufelblatt
- 14, 14', 14", 14"': Übergangsbereich
- 16: Seitenkante
- 18: Seitenkante
- 20: vorderer Vorsprung
- 22: hinterer Vorsprung
- 24: Saugseite
- 26: Druckseite
- 28: Anströmkante
- 30: Abströmkante
- 32: Außenumfangsfläche
- 34, 34"': Erhebung
- 36, 36': Erhebung
- 38: Kernabschnitt

## Patentansprüche

1. Schaufel (2) für eine Strömungsmaschine, insbesondere ein Flugzeugtriebwerk, mit einem Deckband (10) zum Begrenzen eines Hauptstromkanals, das zwei entgegengesetzte Seitenkanten (16, 18) hat, und mit einem Schaufelblatt (12), das sich von dem Deckband (10) weg erstreckt, wobei die Schaufel (2) mindestens zwei mindestens zweigeteilte Übergangsbereiche (14', 14", 14 "') umfasst, wobei ein erster Teil des einen Übergangsbereichs (14') das Schaufelblatt (12) wurzelseitig umgreift und an die eine Seitenkante (18) geführt ist, wobei der andere Übergangsbereich (14", 14 "') einer benachbarten Schaufel (2', 2 ") zugeordnet ist und ein zweiter Teil des anderen Übergangsbereichs als eine in Querrichtung des Deckbandes (10) versetzte Erhebung (34, 36) im Bereich der anderen Seitenkante (16) auf dem Deckband (10) angeordnet ist, wobei die Erhebung in Form dem zweiten Teil des einen Übergangsbereichs entspricht, der auf einer benachbarten Schaufel (2 ", 2"') vorgesehen ist, **dadurch gekennzeichnet, dass** der erster Teil des einen Übergangsbereichs (14') das Schaufelblatt, (12) wurzelseitig vollständig umgreift und auf der Oberfläche des Deckbands (10) angeordnet ist.

2. Schaufel nach Anspruch 1, wobei der Übergangsbereich (14) druck- und saugseitig über die Seitenkanten (16, 18) hinaus geführt ist und das Deckband (10) zumindest eine saugseitige Erhebung (34) sowie zumindest eine druckseitige Erhebung (36) hat.

3. Schaufel nach Anspruch 1 oder 2, wobei der Übergangsbereich (14) tangential in das Deckband (10) übergeht.

4. Schaufel nach einem der vorhergehenden Ansprüche, wobei der Übergangsbereich (14) blattwurzelseitig eine konstante Höhe hat.

5. Schaufel nach einem der vorhergehenden Ansprüche, wobei der Übergangsbereich (14) an dem Schaufelblatt (12) eine maximale Höhe hat und sich diese in Richtung des Deckbandes (10) stetig verkleinert.

6. Schaufel nach einem der vorhergehenden Ansprüche, wobei der Übergangsbereich (14) in etwa eine konstante Breite hat.

7. Schaufelanordnung für eine Strömungsmaschine, insbesondere ein Flugzeugtriebwerk, mit zumindest zwei Schaufeln (2', 2", 2"') nach einem der vorhergehenden Ansprüche, wobei die Schaufeln (2', 2", 2"') seitlich nebeneinander angeordnet sind und eine Schaufeln (2") mit einer Erhebung (34, 36) zumindest einen abgetrennten Abschnitt eines Übergangsbereichs (14', 14"') der anderen Schaufel (2", 2"') bildet.

8. Strömungsmaschine mit einer Schaufelanordnung nach Anspruch 7.

## Claims

1. Blade (2) for a flow device, in particular an aircraft engine, having a cover band (10) for limiting a main flow channel which has two opposite side edges (16, 18), and having a turbine blade (12) which extends away from the cover band (10), wherein the blade (2) comprises at least two divided transition regions (14', 14", 14"'), wherein a first part of the first transition region (14') encompasses the turbine blade (12) on the root side and is guided to one of the side edges (18), wherein the other transition region (14", 14"') is allocated to an adjacent blade (2', 2") and a second part of the other transition region is arranged as an elevation (34, 36), which is displaced in the transverse direction of the cover band (10), in the region of the other side edge (16) on the cover band (10), wherein the shape of the elevation corresponds to the second part of the first transition region which is provided on an adjacent blade (2", 2"'), **characterised in that** the first part of the first transition region (14') completely encompasses the turbine blade (12) on the root side and is arranged on the surface of the cover band (10).

2. Blade according to claim 1, wherein the transition region (14) is guided over the side edges (16, 18) on the discharge side and the suction side, and the cover band (10) has at least one suction-side elevation (34) and at least one discharge-side elevation (36).

3. Blade according to claim 1 or 2, wherein the transition region (14) merges tangentially into the cover band (10).

4. Blade according to one of the preceding claims, wherein the transition region (14) has a constant height on the blade root side.

5. Blade according to one of the preceding claims, wherein the transition region (14) has a maximum height on the turbine blade (12) and constantly diminishes this in the direction of the cover band (10).

6. Blade according to one of the preceding claims, wherein the transition region (14) has an approximately constant width.

7. Blade arrangement for a flow device, in particular an aircraft engine, having at least two blades (2', 2" , 2"') according to one of the preceding claims, wherein the blades (2', 2"', 2"') are arranged laterally alongside one another and a blade (2") having an elevation (34, 36) forms at least one separate section of a transition region (14', 14"') of the other blades (2", 2"').

8. Flow device having a blade arrangement according to claim 7.

## Revendications

1. Aube (2) pour une turbomachine, en particulier un réacteur d'avion, avec une bande de couverture (10) pour la délimitation d'un canal d'écoulement principal présentant deux bordures latérales (16, 18) opposées, et avec une pale (12) s'étendant à partir de la bande de couverture (10), où l'aube (2) comprend au moins deux zones de transition (14', 14", 14"') partagées en au moins deux parties, une première partie de la première zone de transition (14') entourant la pale (12) côté pied et passant contre la première bordure latérale (18), l'autre zone de transition (14", 14"') étant affectée à une aube contiguë (2', 2"), et une deuxième partie de l'autre zone de transition étant disposée sur la bande de couverture (10) au niveau de l'autre bordure latérale (16) de la bande de couverture (10), sous forme de saillie (34, 36) décalée dans lunea direction transversale, la forme de à saillir correspondant à la deuxième partie de à première zone de transition prévue sur une aube contiguë (2", 2"'), **caractérisée en ce que** la première partie de la première zone de transition (14') entoure complètement la pale (12) côté pied et est disposée sur la surface de la bande de couverture (10).

2. Aube selon la revendication 1, où la zone de transition (14) dépasse des bordures latérales (16, 18) côté pression et aspiration et où la bande de couverture (10) a au moins une saillie (34) côté aspiration et au moins une saillie (36) côté pression.

3. Aube selon la revendication 1 ou 2, où la zone de transition (14) se prolonge tangentiellement par la bande de couverture (10).

4. Aube selon l'une des revendications précédentes, où la zone de transition (14) a une hauteur constante côté pied de la pale d'aube.

5. Aube selon l'une des revendications précédentes, où la zone de transition (14) a une hauteur maximale contre la pale (12) et où celle-ci diminue progressivement en direction de la bande de couverture (10).

6. Aube selon l'une des revendications précédentes, où la zone de transition (14) a sensiblement une largeur constante.

7. Agencement d'aubes pour une turbomachine, en particulier un réacteur d'avion, avec au moins deux aubes (2', 2", 2"') selon l'une des revendications précédentes, où les aubes (2', 2", 2"') sont discosées côte à côte latéralement et où une aube (2") avec une saillie (34, 36) forme au moins une section séparée d'une zone de transition (14', 14"') de l'autre aube (2", 2"').

8. Turbomachine avec un agencement d'aubes selon la revendication 7.
